# EUROPÄISCHE PATENTSCHRIFT

(11) **EP 1 282 789 B1**
(45) Veröffentlichungstag und Bekanntmachung des Hinweises auf die Patenterteilung: **27.07.2005**
(21) Anmeldenummer: 01949338.6
(22) Anmeldetag: 11.05.2001
(51) Int. Cl.: F16H 7/08

(54) **KETTENTRIEB**
CHAIN DRIVE
TRANSMISSION PAR CHAINE

(30) Priorität: 16.05.2000 DE 10023974
(43) Veröffentlichungstag der Anmeldung: 12.02.2003
(73) Patentinhaber: EBERT Kettenspanntechnik GmbH, 04435 Schkeuditz (DE)
(72) Erfinder: EBERT, Siegfried, 04435 Schkeuditz (DE); MEIER, Hartmut, 06779 Schierau OT Möst (DE); TANZMANN, Horst, 04157 Leipzig (DE); RUBEN, Simone, 04519 Rackwitz (DE); EBERT, Frank, 04435 Schkeuditz (DE)
(74) Vertreter: Tetzner, Michael, Dipl.-Ing.
(86) Internationale Anmeldenummer: PCT/EP2001/005446
(87) Internationale Veröffentlichungsnummer: WO 2001/088410

(56) Entgegenhaltungen:
- DE-C- 19 808 129
- DE-C- 19 855 376

## Beschreibung

Die Erfindung betrifft einen Kettentrieb mit einer über ein treibendes Kettenrad und einem getriebenen Kettenrad geführten Endloskette und mit ringförmigen Spann- und Dämpfungselementen, welche als elastisch verformbare Elemente zwischen Lostrum und Lasttrum ständig auf beide Trume gleichzeitig wirkt und ellipsenähnlich verformt wird,

Die Erfindung ist anwendbar für Rollenkettentriebe, Buchsenkettentriebe und Zahnkettentriebe in Brennkraftmaschinen, insbesondere in Steuerkettentrieben mit kleinem Achsabstand der Kettenräder.

Aus dem Patent DE 19855376, publiziert nach dem Prioritätstag diesen Anmeldung, ist ein Kettentrieb dieser Art bekannt geworden. Aus DE 19808129 ist ein Kettemtrieb mit dem Merkmalen des Oberbegriffes den Ansprüche 1 bis 4 bekannt.
Bei dem Spann- und Dämpfungselement handelt es sich um einen Ring aus einem elastischen Werkstoff, welcher zwischen der konzentrischen Form im ungespannten Zustand und der Form einer Cassinischen Kurve mit ellipsenähnlicher Gestalt im gespannten Zustand verformbar ist.
Dieses Spann- und Dämpfungselement wird zwischen Lostrum und Lasttrum des Kettentriebes angeordnet und wirkt auf beide Trume gleichzeitig.
Während des Betriebszustandes nimmt es selbsteinstellend zum Spannkraftminimum im Bereich der durch das Spannen erzeugten Lostrumauslenkung, zugleich der Bereich des größten diametralen Trumabstandes, gleitend eine Lage ein.
Dieses Spann- und Dämpfungselement ist in Ineinanderanordnung zu den mittig genuteten Kettenrädern angeordnet.
Es weist eine Breite auf, welche kleiner ist als die Breite der mittig in den Kettenrädern angebrachten Nuten. Die auf beiden Stirnseiten des Ringes befindlichen gewölbten umlaufenden Lagesicherungsflächen bewirken zusammen mit der überschüssigen Schmierflüssigkeit eine hydrodynamische, abstandserzeugende Kraft zu den Nutwänden der Kettenräder. Diese hydrodynamisch erzeugte Kraft verhindert den Kontakt zu den Kettenrädern und ermöglicht eine von Reibungsverschleiß freie Lage des Spann- und Dämpfungselementes.
Außerdem ist dieses Spann- und Dämpfungselement durch die zum Profil der Kette mit Führungsspiel passende umlaufende Mantelfläche und durch seine Seitenflächen gleitführend im Profil der Kette. Es sichert somit seine Lage zwischen den Trumen des Kettentriebes.
Damit ist es zugleich in der Ebene des Kettentriebes und zwischen den Achsen der Kettenräder in der Lostrumauslenkung lagegesichert.

Der Kettentrieb mit diesem Spann- und Dämpfungselement hat den Nachteil, daß speziell genutete Kettenräder und eine um die Breite der mittig in die Kettenräder angebrachten Nuten verbreiterte Kette benötigt werden.

Die größere Breite des Kettentriebes, gemessen über die Bolzenlänge der Kette, erfordert einen entsprechend größeren Arbeitsraum im Gehäuse des Kettentriebes.
Das hat nachteilige Auswirkungen auf die Kompaktheit der Brennkraftmaschine und die konstruktiven Möglichkeiten zur Anordnung des Kettentriebes.

Die technische Ursache dieses Nachteils besteht in der Addition der für die Hauptfunktion "Drehmomentübertragung" leistungnotwendigen Breite des Kettentriebes mit der für die Nebenfunktion "Lagesicherung" lagesicherungsnotwendigen Breite für das Spann- und Dämpfungselement.

Ziel der Erfindung ist ein Kettentrieb mit kleinerem Arbeitsraumbedarf.

Die technische Aufgabe der Erfindung besteht in der Schaffung eines Kettentriebes mit einer über ein treibendes Kettenrad und einem getriebenen Kettenrad geführten Endloskette und mit ringförmigem Spann- und Dämpfungselement, welcher eine Anordnung eines Spann- und Dämpfungselementes oder mehrerer Spann- und Dämpfungselemente zwischen Lostrum und Lasttrum der Kette innerhalb der leistungsnotwendigen Breite des Kettentriebes, gemessen über die maximale Bolzenlänge der Kette, ermöglicht.

Die technische Aufgabe wird jeweils durch die kennzeichnenden Merkmale der Ansprüche 1 bis 4 gelöst.

Es wird von einem Kettentrieb mit ringförmigen selbsttätigen Spann- und Dämpfungselementen im ungespannten Zustand ausgegangen.
Diese Spann- und Dämpfungselemente weisen über den gesamten Ringumfang eine homogene Biegesteifigkeit und Dämpfung auf.
Neben den vorderen und den hinteren Seitenflächen der Kettenräder ist ein sich gegenüberliegendes Paar von Spann- und Dämpfungselementen gelagert.

Der Kontakt der Spann- und Dämpfungselemente erfolgt über ihre ebenen Mantelflächen auf die Laschen von Lostrum und Lasttrum.

Dadurch, daß nach Anspruch 1 die Führungsborde von den Seitenflächen der Kettenräder eine Breite aufweisen, welche größer ist als die Breite der Spann- und Dämpfungselemente erfolgt die Führung der Spann- und Dämpfungselemente über den Laschen und somit in der Kettentriebsebene mit Führungsspiel.

Die Breite des Kettentriebes wird von den Kettenrädern in der inneren Weite der Kette und von den Spann- und Dämpfungselementen in den beiden Laschenreihen differenziert genutzt, so daß die Anordnung des Spann- und Dämpfungselementes zwischen Lostrum und Lasttrum der Kette innerhalb der leistungsnotwendigen Breite des Kettentriebes erfolgt und der Nachteil des zusätzlichen Arbeitsraumes für Spann- und Dämpfungselemente im Gehäuse des Kettentriebes nicht mehr besteht.

Eine sehr einfache und billige Möglichkeit zur Herstellung der Kettenräder mit stirnseitigen Führungsborden, insbesondere in der Massenfertigung, besteht darin, daß die Führungsborde einstückig mit den Kettenrädern ausgeführt werden und in derselben Aufspannung im Arbeitsgang "Drehen des Kettenradrohlings" durch Einstechen einer entsprechenden Nut realisiert werden.
Auch eine mehrteilige Variante für Kettenrad und Führungsborde ist vorteilhaft, wenn die Führungsborde als Bordscheiben mit Distanzbund gesondert gefertigt und anschließend auf die entsprechend vorbereiteten Kettenräder gedrückt werden.

Die Ausführung nach Anspruch 2 löst die Aufgabe ohne Inanspruchnahme von Führungsborden, indem eine Längsführung zwischen Spann- und Dämpfungselement und Kette vorgesehen wird.
Diese Längsführung wird realisiert durch jeweils eine zu den Laschen der Kette mit Führungsspiel führungs-formkorrespondente gleitfähige Mantelfläche der Spann- und Dämpfungselemente, welche in den beidseitigen Laschenprofilen der Kette mit längs in den Laschen verlaufender Führungsnut, längs in den Laschen verlaufender Führungswölbung, längs in den Laschen verlaufendem Führungsspalt, quer abgestufter Laschenhöhen oder gegenüber den Innenlaschen erhöhten Außenlaschen geführt wird.
Die Kettenräder sind stirnseitig plan und bilden mittels der erhöhten Außenlaschen jeweils eine seitliche Führungsfläche zur Führung der Spann- und Dämpfungselemente in der Kettentriebsebene.

Die technologische Realisierung der längs liegenden Führungsnut in das Laschenprofil der Kette läßt sich dadurch erzielen, daß diese Nut während der Kettenfertigung in die montierte und unter dem Werkzeug längs bewegte oder rotierende Kette eingeschliffen wird.
Die Variante mit abgestuften Laschen läßt sich durch die Verwendung unterschiedlich hoher oder zusätzlicher Laschen im Montageprozeß der Kette realisieren.

Die Ausführung nach Anspruch 3 löst die Aufgabe ohne Inanspruchnahme von Führungsborden und ohne Längsführung zwischen Spann- und Dämpfungselement und Kette im Kettenprofil.
Insofern wird der Aufwand an mechanischer Bearbeitung weiter reduziert.

Die seitliche Führung der Spann- und Dämpfungselemente erfolgt durch Anwendung eines magnetischen Feldes, welches von den Kettenrädern ausgeht und die ferromagnetischen Spann- und Dämpfungselemente durchflutet.
Es besteht eine magnetische Haftkraft zwischen Spann- und Dämpfungselement und Stirnflächen der Kettenräder.

Das Magnetfeld kann durch Magnetisierung des Werkstoffes der Kettenräder, durch Einsetzen von Permanentmagneten in die Kettenräder oder durch magnetische Beschichtung realisiert werden. Wegen ihres höheren Energieproduktes und der damit zu erzielenden Kraft ist eine isotrope Magnetisierung vorteilhaft.

Die Ausführung nach Anspruch 4 stellt die Umkehrung des magnetischen Effektes gemäß Anspruch 3 dar.
In diesem Fall weisen die Spann- und Dämpfungselement ein eigenes magetisches Feld auf und die Kettenräder sind ferromagnetisch..
Das jeweilige Magnetfeld der Spann- und Dämpfungselemente kann durch Magnetisierung seines Werkstoffes oder durch magnetische Beschichtung realisiert werden. Wegen des höheren Energieproduktes und der damit zu erzielenden Kraft ist eine isotrope Magnetisierung vorteilhaft.

Die Spann- und Dämpfungselemente können bezogen auf die Rotationsachsen der Kettenräder, sowohl zwischen diesen Achsen als auch um eine oder mehrere Achsen herum angeordnet werden.
Das ermöglicht sehr kleine Achsabstände der Kettenräder und insgesamt eine günstige Variabilität bei der konstruktiven Gestaltung des Spann- und Dämpfungselementes und des Kettentriebes.

Die Erfindung eignet sich besonders für den Einsatz in überschußgeschmierten Steuerkettentrieben von Verbrennungsmotoren mit obenliegenden Nockenwellen.

Die Erfindung soll nachstehend an Ausführungsbeispielen näher erläutert werden:
Figur 1 zeigt die Seitenansicht eines Kettentriebes mit einer über ein rechtsdrehendes treibendes Kettenrad und einem getriebenen Kettenrad geführten Kette, mit zwei in Führungsborden geführten ellipsenähnlich verformten Spann- und Dämpfungselementen.
Figur 2 zeigt in Schnittdarstellung FF des Kettentriebes gemäß Figur 1 die paarweise Anordnung der Spann- und Dämpfungselemente neben den Kettenrädern (Kette nicht dargestellt).
Figur 3 zeigt in vollständiger sowie in 3-fach vergrößerter Schnittdarstellung EE des Kettentriebes gemäß Figur 1 die paarweise Anordnung der Spann- und Dämpfungselemente und deren Kontakt zu den Kettenlaschen.
Figur 4 zeigt die Seitenansicht eines Kettentriebes mit einer über ein rechtsdrehendes treibendes Kettenrad und einem getriebenen Kettenrad geführten Kette, mit in den Führungsnuten der Laschen geführten ellipsenähnlich verformten Spann- und Dämpfungselementen.
Figur 5 zeigt in vollständiger sowie in 3-fach vergrößerter Schnittdarstellung GG des Kettentriebes gemäß Figur 4 die paarweise Anordnung der Spann- und Dämpfungselemente und deren Kontakt zu den Kettenlaschen.
Figur 6 zeigt die Seitenansicht eines Kettentriebes mit einer über ein rechtsdrehendes treibendes Kettenrad und einem getriebenen Kettenrad geführten Kette, mit an den Seitenflächen der Kettenräder permanent-magnetisch geführten ferromagnetischen ellipsenähnlich verformten Spann- und Dämpfungselementen.
Figur 7 zeigt in vollständiger sowie in 3-fach vergrößerter Schnittdarstellung HH des Kettentriebes gemäß Figur 6 die paarweise Anordnung der Spann- und Dämpfungselemente und deren Kontakt zu den Kettenrädern (Kette nicht dargestellt).
Figur 8 zeigt die Seitenansicht eines Kettentriebes mit einer über ein rechtsdrehendes treibendes Kettenrad und einem getriebenen Kettenrad geführten Kette, mit an den Seitenflächen der ferromagnetischen Kettenräder geführten ellipsenähnlich verformten permanent-magnetischen Spann- und Dämpfungselementen.
Figur 9 zeigt die Seitenansicht eines Kettentriebes mit einer über ein rechtsdrehendes treibendes Kettenrad und einem getriebenen Kettenrad geführten Kette, mit an den Seitenflächen der permanent-magnetischen Kettenräder geführten ellipsenähnlich verformten permanent-magnetischen Spann- und Dämpfungselementen.

Die beispielhaften Kettentriebe arbeiten in überschüssiger Ölschmierung, wie sie üblicherweise durch Tauch- oder Druckumlaufschmierung in einem Getriebegehäuse erreicht wird.

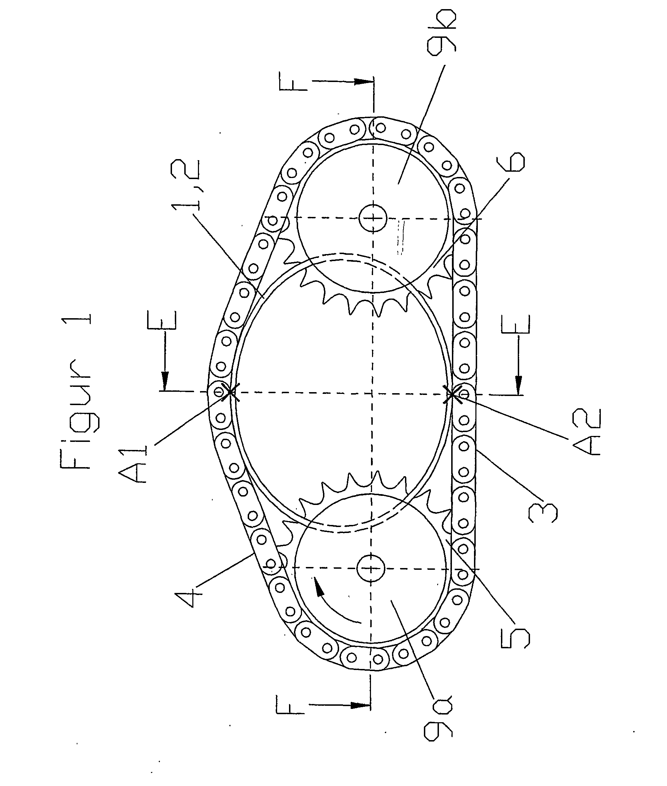

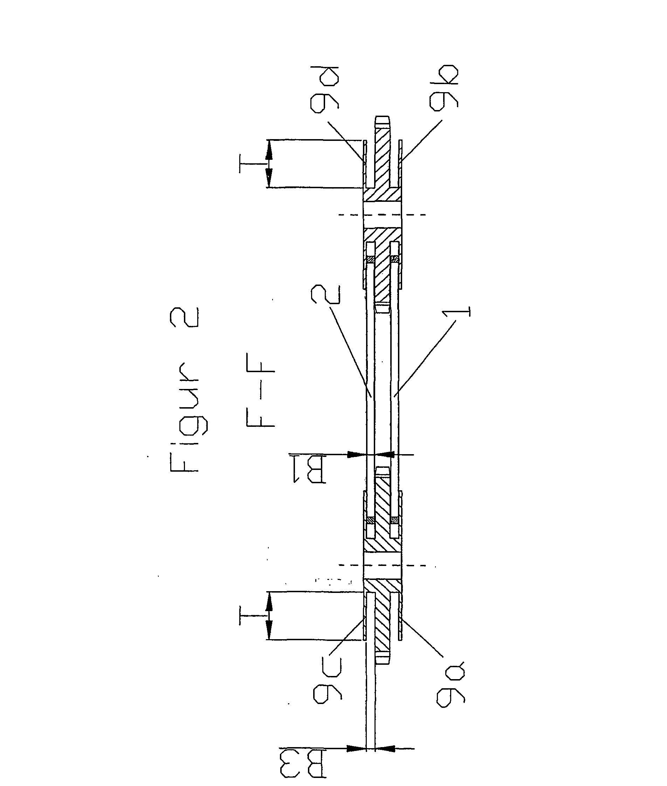

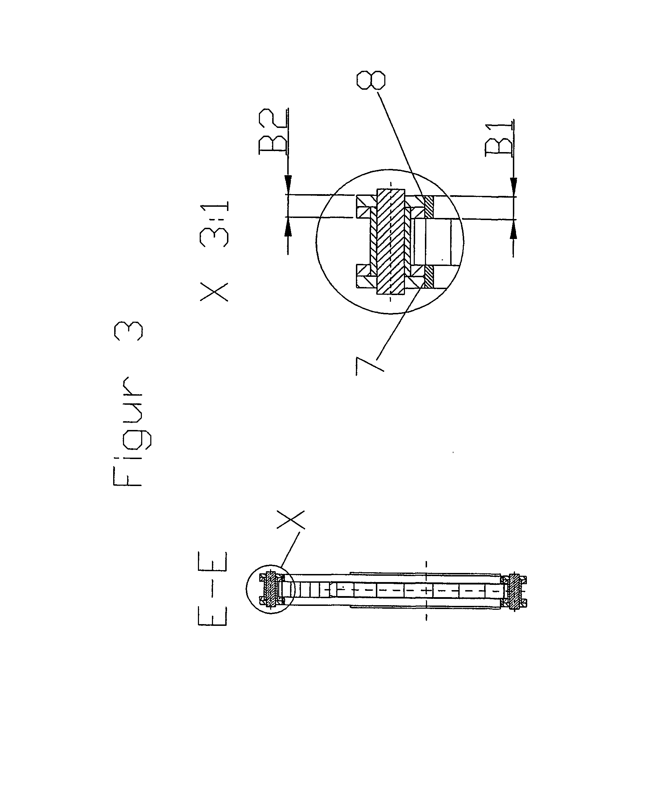

### Ausführungsbeispiel 1 (zugehörige Figuren 1,2,3):

Das vordere Spann- und Dämpfungselement 1 und das hintere Spann- und Dämpfungselement 2 sind elastisch ellipsenähnlich verformt und zwischen Lasttrum 3 und Lostrum 4 sowie zwischen den Achsen des treibenden Kettenrades 5 und des getriebenen Kettenrades 6 angeordnet. Die Zähnezahlen der Kettenräder sind gleich.
Das Lasttrum zwischen dem treibenden Kettenrad und dem getriebenen Kettenrad verläuft gerade, während das Lostrum durch die Spannkraft des selbsttätigen Spann- und Dämpfungselementes eine bogenförmige Lostrumauslenkung nach oben aufweist.

Der kleinste Abstand zwischen den auf der senkrechten Achse liegenden Punkten A1, A2 der selbsttätigen Spann- und Dämpfungselemente ist größer als der Durchmesser des größten Kettenrades des Kettentriebes und kleiner als der Durchmesser der Spann- und Dämpfungselemente in der ursprünglichen konzentrischen Form.
Die Spann- und Dämpfungselemente befinden sich dadurch im gespannten Zustand.
Die Spannkraft aus der Rückfederung von der ellipsenähnlich gespannten Form zur konzentrischen spannungsfreien Form bewirkt eine Auslenkung des Lostrumes bis dessen Kettengelenke spielfrei sind.
In dieser Phase ist das Maximum der Lostrumauslenkung erreicht; der Abstand A1, A2 ist am größten. Es liegt das für das Spann- und Dämpfungselement im Kettentrieb erreichbare Spannkraftminimum vor.
Da sich die mögliche Lostrumauslenkung in Richtung beider Kettenräder geometrisch verringert, nehmen die nur wenige Gramm schweren Spann- und Dämpfungselemente sehr schnell reagierend selbsteinstellend eine spannkraftminimale Lage in der Abstandsmitte zwischen den Kettenrädern ein.
Sie entziehen sich dabei selbst in der Kette einen Freiheitsgrad und nehmen jeweils eine Lage in der Abstandsmitte der Kettenräder ein.

Die Spann- und Dämpfungselemente haben jeweils eine Breite B₁, welche gleich ist der Breite B₂ der Laschen.

Die Laschen der Kette sind gerade und gleich hoch. Daraus ergibt sich ein ebenes Laschenprofil der Kette,
Die Mantelfläche 7 des vorderen Spann- und Dämpfungselementes und die Mantelfläche 8 des hinteren Spann- und Dämpfungselementes sind jeweils zylindrisch.
Die zylindrischen Mantelflächen stehen in Kontakt zu den Laschen der Kette.
Die Spann- und Dämpfungselemente rollen bei bewegtem Kettentrieb mit Schlupf auf dem Laschenprofil der Kette und übertragen die Spannkraft auf die Trume.
Die Kettenräder haben an ihren Seitenflächen im Abstand B₃ > B₁ Führungsborde 9a, 9b, 9c, 9d. Die zwischen den Kettenrädern und den Führungsborden gebildeten Nuten mit der Tiefe T beinhalten in der Breite B₃ jeweils ein Führungsspiel zur Führung der Spann- und Dämpfungselemente.
Die Nuten sind damit die rotierenden Fürungsnuten zur Lagesicherung der Spann- und Dämpfungselemente in der Ebene des Kettentriebes.
Die Dicke der Führungsborde ist so bemessen, daß die Gesamtbreite des Kettentriebes, gemessen über die genieteten Köpfe der Kettenbolzen, nicht überragen.

Die Spann- und Dämpfungselemente sind somit ausreichend lagegesichert in ihrer Distanz zu den Kettenrädern und in der Ebene des Kettentriebes. Sie liegen dabei nicht außerhalb der leistungsnotwendigen Breite des Kettentriebes. Ebenso bedingen sie keine Verbreiterung des Kettentriebes.

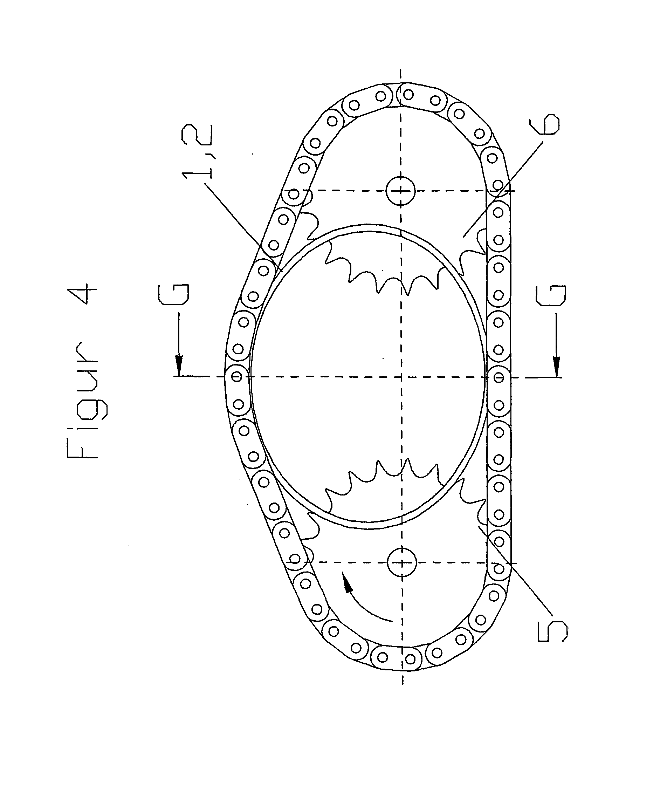

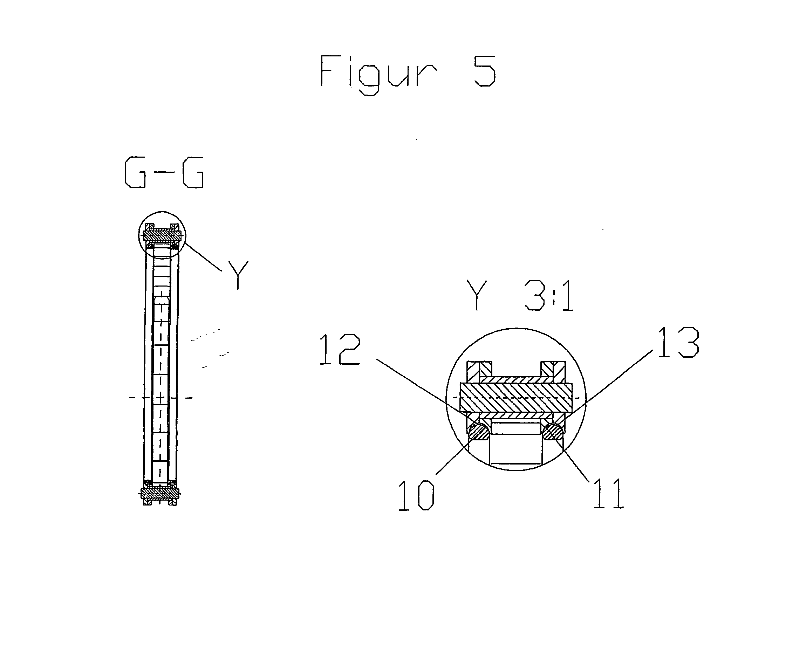

### Ausführungsbeispiel 2 (zugehörige Figuren 4, 5):

Der Kettentrieb besteht ebenfalls aus mit einer über ein rechtsdrehendes treibendes Kettenrad 5 und einem getriebenen Kettenrad 6 geführten Kette und mit zwei ellipsenähnlich verformten Spann- und Dämpfungselementen 1,2.

Die Lagesicherung der Spann- und Dämpfungselemente in der Distanz zu den Kettenrädern erfolgt äquivalent zum Ausführungsbeispiel 1.

Die Lagesicherung der Spann- und Dämpfungselemente in der Ebene des Kettentriebes erfolgt durch ein Mantelflächenprofil 10 des vorderen Spann- und Dämpfungselementes, und durch ein Mantelflächenprofil 11 des hinteren Spann- und Dämpfungselementes, wobei die Mantelflächenprofile mit Führungsspiel in die Nut 12 des vorderen Laschenprofils beziehungsweise in die Nut 13 des hinteren Laschenprofils der Kette passen.
In Kombination mit der Spannkraft der Spann- und Dämpfungselemente halten sich diese in den Ebenen der jeweiligen Nuten und damit in der Ebene des Kettentriebes.
Die vordere und die hintere Nut sind damit die beidseitig der Kettenräder im Kettentrieb umlaufenden Fürungen zur Lagesicherung der Spann- und Dämpfungselemente in der Ebene des Kettentriebes.
Die Spann- und Dämpfungselemente sind somit ausreichend lagegesichert in ihrer Distanz zu den Kettenrädern und in der Ebene des Kettentriebes. Sie liegen dabei nicht außerhalb der leistungsnotwendigen Breite des Kettentriebes. Ebenso bedingen sie keine Verbreiterung des Kettentriebes.

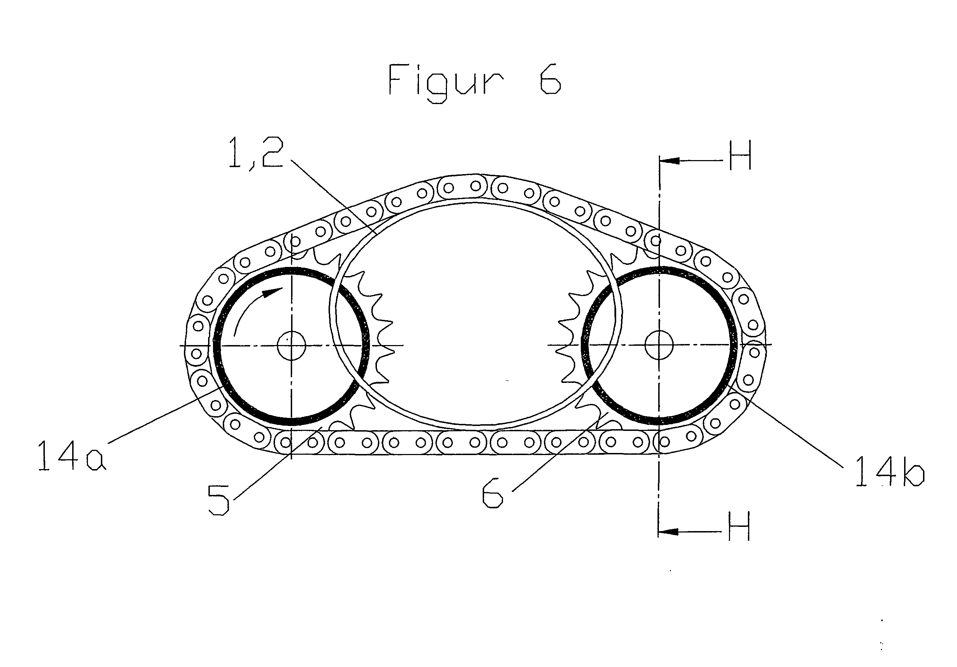

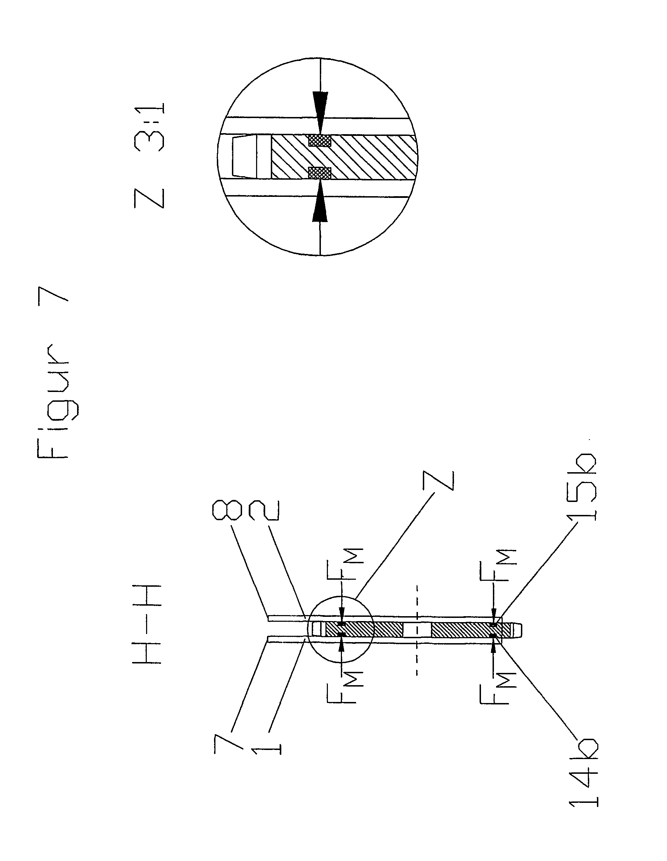

### Ausführungsbeispiel 3 (zugehörige Figuren 6,7):

Der diesbezügliche Kettentrieb besteht ebenfalls aus mit einer über ein rechtsdrehendes treibendes Kettenrad 5 und einem getriebenen Kettenrad 6 geführten Kette und mit zwei ellipsenähnlich verformten Spann- und Dämpfungselementen 1,2.

Die Lagesicherung der Spann- und Dämpfungselemente in der Distanz zu den Kettenrädern erfolgt äquivalent zu den bisherigen Ausführungsbeispielen.

Die Lagesicherung der Spann- und Dämpfungselemente in der Ebene des Kettentriebes erfolgt durch ein permanent-magnetisches Feld, welches von vorderen Magnetringen 14a, 14b und hinteren Magnetringen 15a, 15b ausgeht. Die Magnetringe sind isotrop axial magnetisiert und bündig in den Stirnflächen der Kettenräder angeordnet.

Die ferromagnetisch leitfähigen Spann- und Dämpfungselemente haben zylindrische Mantelflächen 7, 8 und werden stark vom jeweiligen Magnetfeld der Magnetringe durchdrungen. Die daraus resultierende magnetische Kraft F_{M} bewirkt das Heranziehen der Spann- und Dämpfungselemente an die Stirnflächen der Kettenräder.

Das permanent-magnetische Feld der Kettenräder wirkt auf beide Spann- und Dämpfungselemente mit einer magnetischen Gesamtkraft von jeweils F_{M} > 15 F_{G}, wobei mit F_{G} die Gewichtskraft eines Spann- und Dämpfungselementes gemeint ist.
Damit ist die magnetische Haftkraft der Spann- und Dämpfungselemente an den Stirnflächen der Kettenräder auch bei extremen Beschleunigungen oder Verzögerungen durch Frontalaufprall eines Fahrzeuges aus sehr hohen Fahrgeschwindigkeiten mit mehrfacher Sicherheit ausreichend.

Auch bei Rotation der Kettenräder erfolgt der magnetische Fluß durch die ferromagnetischen Spann- und Dämpfungselemente, die somit ausreichend lagegesichert sind in ihrer Distanz zu den Kettenrädern und in der Ebene des Kettentriebes.
Sie liegen dabei nicht außerhalb der leistungsnotwendigen Breite des Kettentriebes. Ebenso bedingen sie keine Verbreiterung des Kettentriebes.

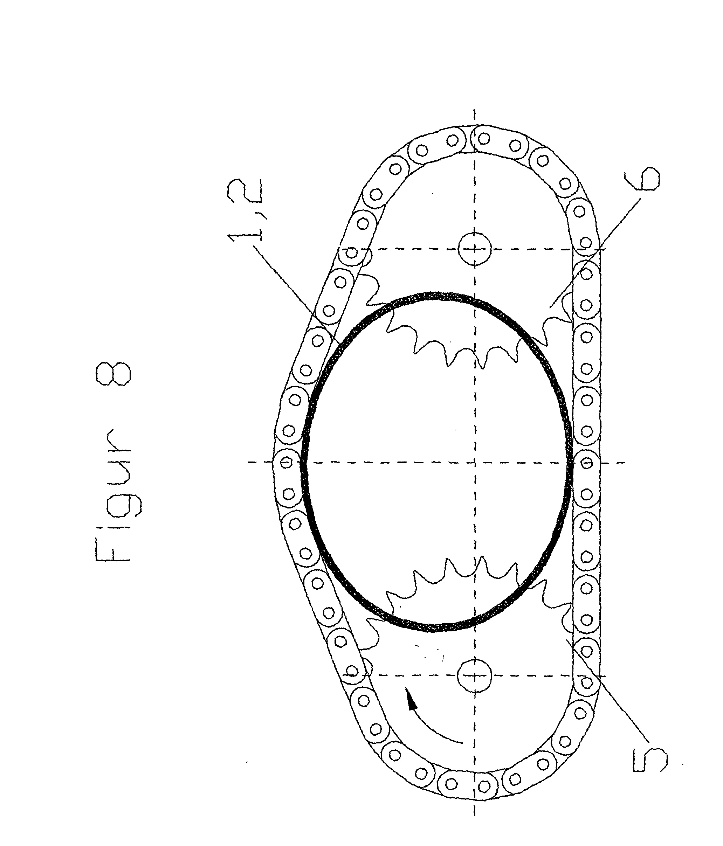

### Ausführungsbeispiel 4 (zugehörige Figur 8):

Der diesbezügliche Kettentrieb besteht ebenfalls aus mit einer über ein rechtsdrehendes treibendes Kettenrad 5 und einem getriebenen Kettenrad 6 geführten Kette und mit zwei ellipsenähnlich verformten Spann- und Dämpfungselementen 1,2.

Die Lagesicherung der Spann- und Dämpfungselemente in der Distanz zu den Kettenrädern erfolgt äquivalent zu den bisherigen Ausführungsbeispielen.

Die Lagesicherung der Spann- und Dämpfungselemente in der Ebene des Kettentriebes erfolgt durch permanant-magnetische Felder, welche vom vorderen magnetischen Spann- und Dämpfungselement und hinterem magnetischen Spann- und Dämpfungselement ausgehen.
Die Kettenräder bestehen aus ferromagnetischem Werstoff.
Die Spann- und Dämpfungselemente sind isotrop axial magnetisiert und haben zylindrische Mantelflächen 7, 8. Ihre Magnetfelder durchdringen stark den ferromagnetischen Werkstoff des treibenden Kettenrades 5 und des getriebenen Kettenrades 6.
Die daraus resultierende magnetische Haftkraftraft F_{M} bewirkt das Heranziehen der Spann- und Dämpfungselemente an die Seitenflächen der Kettenräder.

Auch bei Rotation der Kettenräder erfolgt der magnetische Fluß durch die ferromagnetischen Kettenräder. Die Spann- und Dämpfungselemente sind somit ausreichend lagegesichert in ihrer Distanz zu den Kettenrädern und in der Ebene des Kettentriebes.
Sie liegen dabei nicht außerhalb der leistungsnotwendigen Breite des Kettentriebes. Ebenso bedingen sie keine Verbreiterung des Kettentriebes.

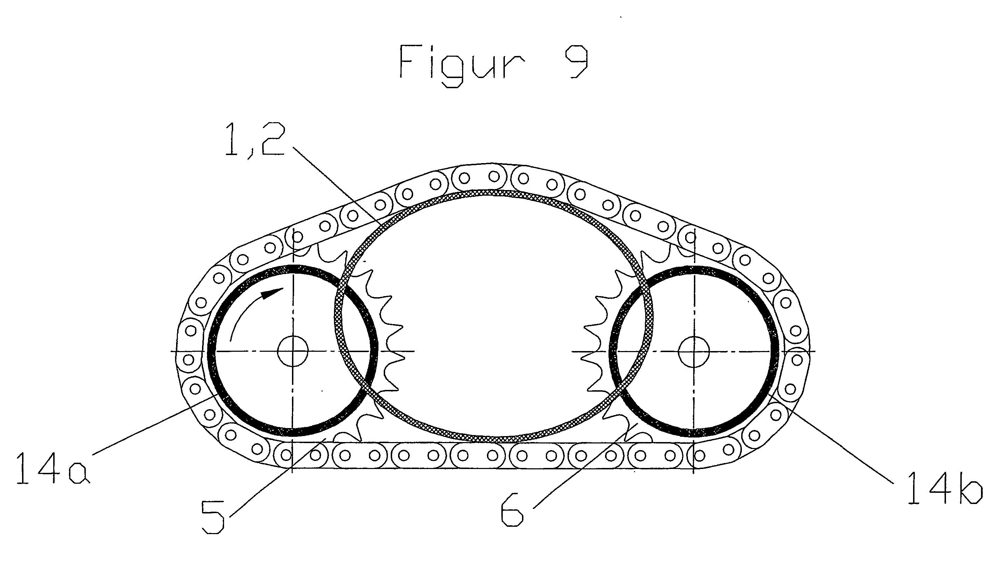

### Ausführungsbeispiel 5 (zugehörige Figur 9):

Der diesbezügliche Kettentrieb besteht ebenfalls aus mit einer über ein rechtsdrehendes treibendes Kettenrad 5 und einem getriebenen Kettenrad 6 geführten Kette und mit zwei ellipsenähnlich verformten Spann- und Dämpfungselementen 1,2.

Die Lagesicherung der Spann- und Dämpfungselemente in der Distanz zu den Kettenrädern erfolgt äquivalent zu den bisherigen Ausführungsbeispielen.

Die Lagesicherung der Spann- und Dämpfungselemente in der Ebene des Kettentriebes erfolgt durch magnetische Felder, welche vom vorderen permanent-magnetischen Spann- und Dämpfungselement und hinterem permananet-magnetischen Spann- und Dämpfungselement ausgehen. Die Spann- und Dämpfungselemente sind isotrop axial magnetisiert. Die Polarisation der magnetischen Kettenräder ist jeweils entgegengestezt zu den Magnetfeldern der Spann- und Dämpfungselemente.

Die daraus resultierende magnetische Kraft F_{M} bewirkt das Heranziehen der Spann- und Dämpfungselemente an die Stirnflächen der Kettenräder.
Die magnetischen Spann- und Dämpfungselemente haben zylindrische Mantelflächen 7,8.

Auch bei Rotation der Kettenräder erfolgt der magnetische Fluß durch die ferromagnetischen Kettenräder. Die Spann- und Dämpfungselemente sind somit ausreichend lagegesichert in ihrer Distanz zu den Kettenrädern und in der Ebene des Kettentriebes.
Sie liegen dabei nicht außerhalb der leistungsnotwendigen Breite des Kettentriebes. Ebenso bedingen sie keine Verbreiterung des Kettentriebes.

Als Werkstoff für die Spann- und Dämpfungselemente wurden eine federharte und zähe Metallegierung mit niedrigen Gleitreibungswert zur Kette und zu den Kettenrädern/Führungsborden gewählt.

Die beispielhaft gezeigten selbsttätige Spann- und Dämpfungselemente sind im ungespannten Zustand konzentrisch.

Über die Erfüllung der technischen Aufgabe hinaus bestehen weitere bedeutende Vorteile der Erfindung in der einfachen technischen Struktur.
Das wirkt sich vor allem auf die Anzahl der Einzelelemente in der Fertigung, das Masse-Leistungs-Verhältnis hinsichtlich der Kettenfliehzugkraft, die Wirksamkeit gegen höherfiequente Schwingungen und kurze Überholstöße im Lasstrum, die Montage der Baugruppe "Kettentrieb" selbst und ihre Montage in den Zylinderkopf der Brennkraftmaschine positiv aus.

## Patentansprüche

1. Kettentrieb mit einer über ein treibendes Kettenrad (5) und einem getriebenen Kettenrad (6) geführten Endloskette und mit ringförmigen Spann- und Dämpfungselementen (1,2) welche als elastisch ellipsenähnlich verformbare Elemente zwischen Lasttrum (3) und Lostrum (4) auf beide Trume gleichzeitig wirken, **dadurch gekennzeichnet,**
**daß** die Spann- und Dämpfungselemente (1, 2) in den Ebenen der Laschen des Kettentriebes paarweise gegenüberliegend neben den Kettenrädern (5, 6) angeordnet sind, jeweils eine Breite B₁, welche kleiner oder gleich der Breite B₂ der Laschen ist,
und eine zu den Laschen der Endloskette führungs- und -gleitfähige zylindrische Mantelfläche (7,8) aufweisen, die Endloskette ein ebenes Laschenprofil und die Kettenräder (5, 6) im Abstand B₃ > B₁ seitliche, die Breite des Kettentriebes, gemessen über die maximale Bolzenlänge der Endloskette, nicht überragende Führungsborde (9a, 9b, 9c, 9d) aufweisen.

2. Kettentrieb mit einer über ein treibendes Kettenrad (5) und einem getriebenen Kettenrad (6) geführten Endloskette und mit ringförmigen Spann- und Dämpfungselementen (1,2), welche als elastisch ellipsenähnlich verformbare Elemente zwischen Lasttrum (3) und Lostrum (4) auf beide Trume gleichzeitig wirken, **dadurch gekennzeichnet,**
**daß** die Spann- und Dämpfungselemente (1,2) in den Ebenen der Laschen des Kettentriebes paarweise gegenüberliegend neben den Kettenrädern (5, 6) angeordnet sind, jeweils eine Breite B₁, welche kleiner oder gleich der Breite B₂ der Laschen ist, und zur Nut (12) im vorderen Laschenprofil der Endloskette und zur Nut (13) im hinteren Laschenprofil der Endloskette mit Führungsspiel führungs-formkorrespondente Mantelflächenprofile (10, 11) aufweisen, die Endloskette längs in den Laschen verlaufende Nuten (12, 13) des Laschenprofils aufweist, und die Kettenräder (5, 6) seitlich plan sind.

3. Kettentrieb mit einer über ein treibendes Kettenrad (5) und einem getriebenen Kettenrad (6) geführten Endloskette und mit ringförmigen Spann- und Dämpfungselementen (1,2) welche als elastisch ellipsenähnlich verformbare Elemente zwischen Lasttrum (3) und Lostrum (4) auf beide Trume gleichzeitig wirken, **dadurch gekennzeichnet,**
**daß** die Spann- und Dämpfungselemente (1, 2) in den Ebenen der Laschen des Kettentriebes paarweise gegenüberliegend neben den Kettenrädern (5, 6) angeordnet sind, eine Breite B₁, welche kleiner oder gleich der Breite B₂ der Laschen ist, und Ferromagnetismus aufweisen, die Endloskette ein ebenes Laschenprofil und die Kettenräder (5,6) an den Seitenflächen magnetische Felder aufweisen.

4. Kettentrieb mit einer über ein treibendes Kettenrad (5) und einem getriebenen Kettenrad (6) geführten Endloskette und mit ringförmigen Spann- und Dämpfungselementen (1,2), welche als elastisch ellipsenähnlich verformbare Elemente zwischen Lasttrum (3) und Lostrum (4) auf beide Trume gleichzeitig wirken,
**dadurch gekennzeichnet, daß** die Spann- und Dämpfungselemente (1,2) in den Ebenen der Laschen des Kettentriebes paarweise gegenüberliegend neben den Kettenrädern (5, 6) angeordnet sind, jeweils ein axial polarisiertes magnetisches Feld und eine Breite B₁ welche kleiner oder gleich der Breite B₂ der Laschen ist, aufweisen sowie die Endloskette ein ebenes Laschenprofil und die Kettenräder (5, 6) entgegengesetzt zu den magentischen Feldern der Spann- und Dämpfungselemente (1,2) polarisierte axiale magnetische Felder aufweisen.

5. Kettentrieb nach den Ansprüchen 1 bis 4, **gekennzeichnet durch** die Anordnung der Spann- und Dämpfungselemente (1, 2) zwischen den Achsen der Kettenräder (5, 6).

6. Kettentrieb nach den Ansprüchen 1 bis 4, **gekennzeichnet durch** die Anordnung der Spann- und Dämpfungselemente (1, 2)um um eine oder mehrere Achsen der Kettenräder (5, 6) herum.

7. Kettentrieb nach Anspruch 2, **gekennzeichnet durch** die Verwendung von längs in den Laschen verlaufender Führungswölbung, längs in den Laschen verlaufendem Führungsspalt, quer abgestufte Laschenhöhen oder gegenüber den Innenlaschen erhöhte Außenlaschen und dazu führungs-formkorrespondenten Mantelflächenprofilen (10, 11) an Stelle der Nuten.

8. Kettentrieb nach Anspruch 3, **dadurch gekennzeichnet, daß** die Spann- und Dämpfungselemente (1, 2) ein magnetisches Feld, die Kette ein ebenes Laschenprofil und die Kettenräder Ferromagnetismus aufweisen.

## Claims

1. A chain drive having an endless chain guided over a driving chain wheel (5) and a driven chain wheel (6) and having annular tensioning and damping elements (1, 2), which, in the form of resiliently elliptically deformable elements between the loaded strand (3) and the slack strand (4), act simultaneously on both strands, **characterised in that** the tensioning and damping elements (1, 2) are arranged in the planes of the link plates of the chain drive in pairs lying opposite each other next to the chain wheels (5, 6), each have a width B₁ that is less than or the same as the width B₂ of the link plates, and have a cylindrical outer surface (7, 8) capable of both guiding and sliding with respect to the link plates of the endless chain, the endless chain has a flat link plate profile and the chain wheels (5, 6) have, at a spacing B₃ > B₁, lateral guide flanges (9a, 9b, 9c, 9d) not projecting beyond the width of the chain drive, measured over the maximum bolt length of the endless chain.

2. A chain drive having an endless chain guided over a driving chain wheel (5) and a driven chain wheel (6) and having annular tensioning and damping elements (1, 2), which, in the form of resiliently elliptically deformable elements between the loaded strand (3) and the slack strand (4), act simultaneously on both strands, **characterised in that** the tensioning and damping elements (1, 2) are arranged in the planes of the link plates of the chain drive in pairs lying opposite each other next to the chain wheels (5, 6), each have a width B₁ that is less than or the same as the width B₂ of the link plates, and have outer surface profiles (10, 11) corresponding in guide form with guide clearance to the groove (12) in the front link plate profile of the endless chain and to the groove (13) in the rear link plate profile of the endless chain, the endless chain has grooves (12, 13) of the link plate profiles running longitudinally in the link plates, and the chain wheels (5, 6) are laterally planar.

3. A chain drive having an endless chain guided over a driving chain wheel (5) and a driven chain wheel (6) and having annular tensioning and damping elements (1, 2), which, in the form of resiliently elliptically deformable elements between the loaded strand (3) and the slack strand (4), act simultaneously on both strands, **characterised in that** the tensioning and damping elements (1, 2) are arranged in the planes of the link plates of the chain drive in pairs lying opposite each other next to the chain wheels (5, 6), have a width B₁ that is less than or the same as the width B₂ of the link plates, and exhibit ferromagnetism, the endless chain has a flat link plate profile and the chain wheels (5, 6) have magnetic fields on their lateral surfaces.

4. A chain drive having an endless chain guided over a driving chain wheel (5) and a driven chain wheel (6) and having annular tensioning and damping elements (1, 2), which, in the form of resiliently elliptically deformable elements between the loaded strand (3) and the slack strand (4), act simultaneously on both strands, **characterised in that** the tensioning and damping elements (1, 2) are arranged in the planes of the link plates of the chain drive in pairs lying opposite each other next to the chain wheels (5, 6), each have an axially polarised magnetic field and a width B₁ that is less than or the same as the width B₂ of the link plates, and the endless chain has a flat link plate profile and the chain wheels (5, 6) have polarised axial magnetic fields inverse to the magnetic fields of the tensioning and damping elements (1, 2).

5. A chain drive according to any one of claims 1 to 4, **characterised by** the arrangement of the tensioning and damping elements (1, 2) between the axes of the chain wheels (5, 6).

6. A chain drive according to claim 1 to 4, **characterised by** the arrangement of the tensioning and damping element (1, 2) around one or more axes of the chain wheels (5, 6).

7. A chain drive according to claim 2, **characterised by** the use of guide curvature running longitudinally in the link plates, a guide slot running longitudinally in the link plates, transversely stepped link plate heights or outer link plates raised with respect to the inner link plates, and outer surface profiles (10, 11) corresponding in guide form thereto in place of the grooves.

8. A chain drive according to claim 3, **characterised in that** the tensioning and damping elements (1, 2) have a magnetic field, the chain has a flat link plate profile and the chain wheels exhibit ferromagnetism.

## Revendications

1. Transmission par chaîne qui présente une chaîne sans fin guidée sur un pignon d'entraînement de chaîne (5) et sur un pignon entraîné de chaîne (6), et des éléments (1, 2) de tension et d'amortissement de forme annulaire qui agissent simultanément sur les deux brins comme éléments élastiquement déformables en forme d'ellipse situés entre le brin en charge (3) et le brin délesté (4), **caractérisée en ce que**
les éléments de tension et d'amortissement (1, 2) sont opposés deux à deux à côté des pignons de chaîne (5, 6) dans les plans des éclisses de la transmission par chaîne et ont chacun une largeur B₁ plus petite ou égale à la largeur B₂ des éclisses, et **en ce qu'**ils présentent une surface cylindrique d'enveloppe (7, 8) de guidage et de coulissement sur les éclisses de la chaîne sans fin, la chaîne sans fin présentant un profil plan d'éclisses et les pignons de chaîne (5, 6) présentant à une distance B₃ > B₁ des bords de guidage (9a, 9b, 9c, 9d) qui ne débordent pas de la largeur de la transmission par chaîne mesurée sur la longueur maximale des tourillons de la chaîne sans fin.

2. Transmission par chaîne qui présente une chaîne sans fin guidée sur un pignon d'entraînement de chaîne (5) et sur un pignon entraîné de chaîne (6), et des éléments (1, 2) de tension et d'amortissement de forme annulaire qui agissent simultanément sur les deux brins comme éléments élastiquement déformables en forme d'ellipse situés entre le brin en charge (3) et le brin délesté (4), **caractérisée en ce que**
les éléments de tension et d'amortissement (1, 2) sont opposés deux à deux à côté des pignons de chaîne (5, 6) dans les plans des éclisses de la transmission par chaîne et ont chacun une largeur B₁ plus petite ou égale à la largeur B₂ des éclisses, et présentent dans leurs surfaces d'enveloppe des profils (10, 11) de guidage en correspondance géométrique avec un jeu de guidage par la rainure (12) ménagée dans le profil des éclisses avant de la chaîne sans fin et par la rainure (13) ménagée dans le profil des éclisses arrière de la chaîne sans fin, les pignons de chaîne (5, 6) étant plans sur leurs faces.

3. Transmission par chaîne qui présente une chaîne sans fin guidée sur un pignon d'entraînement de chaîne (5) et sur un pignon entraîné de chaîne (6), et des éléments (1, 2) de tension et d'amortissement de forme annulaire qui agissent simultanément sur les deux brins comme éléments élastiquement déformables en forme d'ellipse situés entre le brin en charge (3) et le brin délesté (4), **caractérisée en ce que**
les éléments de tension et d'amortissement (1, 2) sont opposés deux à deux à côté des pignons de chaîne (5, 6) dans les plans des éclisses de la transmission par chaîne et ont chacun une largeur B₁ plus petite ou égale à la largeur B₂ des éclisses, et présentent un ferromagnétisme, la chaîne sans fin présentant un profil plan des éclisses et les pignons de chaîne (5, 6) présentant des champs magnétiques sur leurs surfaces latérales.

4. Transmission par chaîne qui présente une chaîne sans fin guidée sur un pignon d'entraînement de chaîne (5) et sur un pignon entraîné de chaîne (6), et des éléments (1, 2) de tension et d'amortissement de forme annulaire qui agissent simultanément sur les deux brins comme éléments élastiquement déformables en forme d'ellipse situés entre le brin en charge (3) et le brin délesté (4), **caractérisée en ce que**
les éléments de tension et d'amortissement (1, 2) sont opposés deux à deux à côté des pignons de chaîne (5, 6) dans les plans des éclisses de la transmission par chaîne, chacun de ces éléments présentant un champ magnétique polarisé axialement et une largeur B₁ qui est inférieure ou égale à la largeur B₂ des éclisses, la chaîne sans fin présentant un profil plan des éclisses et les pignons de chaîne (5, 6) présentant des champs magnétiques polarisés axialement opposés aux champs magnétiques des éléments (1, 2) de tension et d'amortissement.

5. Transmission par chaîne selon les revendications 1 à 4, **caractérisée en ce que** les éléments (1, 2) de tension et d'amortissement sont agencés entre les axes des pignons de chaîne (5, 6).

6. Transmission par chaîne selon les revendications 1 à 4, **caractérisée en ce que** les éléments (1, 2) de tension et d'amortissement sont disposés autour du ou des axes du ou des pignons de chaîne (5, 6).

7. Transmission par chaîne selon la revendication 2, **caractérisée par** l'utilisation, au lieu des rainures, d'une courbure de guidage qui s'étend longitudinalement dans les éclisses, d'un interstice de guidage qui s'étend longitudinalement dans les éclisses, d'éclisses de hauteurs étagées dans le sens transversal ou d'éclisses extérieures plus hautes que les éclisses intérieures, et des surfaces d'enveloppe avec des profils (10, 11) de guidage en correspondance géométrique.

8. Transmission par chaîne selon la revendication 3, **caractérisée en ce que** les éléments (1, 2) de tension et d'amortissement présentent un champ magnétique, la chaîne présentant un profil d'éclisses plan et les pignons de chaîne présentant un ferromagnétisme.
